# EUROPÄISCHE PATENTSCHRIFT

(11) **EP 1 005 421 B1**
(45) Veröffentlichungstag und Bekanntmachung des Hinweises auf die Patenterteilung: **21.11.2001**
(21) Anmeldenummer: 98951181.1
(22) Anmeldetag: 20.08.1998
(51) Int. Cl.: B60K 35/00, G08G 1/0967, G06K 9/74

(54) **VERFAHREN ZUR INFORMATIONSANZEIGE IN EINEM KRAFTFAHRZEUG**
METHOD FOR DISPLAYING INFORMATION IN A MOTOR VEHICLE
PROCEDE D'AFFICHAGE D'INFORMATIONS DANS UN VEHICULE AUTOMOBILE

(30) Priorität: 23.08.1997 DE 19736774
(43) Veröffentlichungstag der Anmeldung: 07.06.2000
(73) Patentinhaber: ROBERT BOSCH GMBH, 70442 Stuttgart (DE)
(72) Erfinder: PÖCHMÜLLER, Werner, D-31139 Hildesheim (DE)
(86) Internationale Anmeldenummer: DE9802438
(87) Internationale Veröffentlichungsnummer: WO9910195

(56) Entgegenhaltungen:
- EP-A- 0 678 823
- DE-A- 3 147 767
- DE-A- 4 142 091
- DE-U- 29 609 922
- FR-A- 2 672 411
- "ON-BOARD COMPUTER "READS" ROAD SIGNS" INDUSTRY WEEK, Bd. 246, Nr. 1, 6. Januar 1997, Seite 33 XP000767930

## Beschreibung

### Stand der Technik

Die Erfindung geht aus von einem Verfahren zur Informationsanzeige in einem Kraftfahrzeug nach der Gattung des Hauptanspruchs. Ein derartiges Verfahren ist z.B. aus der EP-A-678823 bekannt.

In heutigen Fahrzeugen existieren keinerlei automatisierte Funktionen zur Unterstützung des Fahrers bei der Verkehrszeichenerkennung. Diese hat jedoch einen hohen Komfort- und Sicherheitswert, z.B. zur Warnung des Fahrers bei Geschwindigkeitsbeschränkungen oder Überholverboten, bzw. zur Information des Fahrers über momentan geltende Beschränkungen auf dessen Wunsch. Bei der existierenden Verkehrsinfrastruktur kann eine Erkennung und Auswertung von Verkehrszeichen nur mit Hilfe von Bildsensoren erfolgen, da die Information rein optisch auswertbar vorliegt. Aufgrund der hohen Komfort- und Sicherheitsrelevanz einer Verkehrszeichenerkennung wird an videobasierter Verkehrszeichenerkennung gearbeitet. Die bekannten Ansätze gehen alle von einer Einschränkung der zu erkennenden Verkehrszeichenmenge aus. Basierend auf der zu erkennenden Verkehrszeichenmenge erfolgt eine Bildsegmentierung des von einer Kamera aufgenommenen Bildes, um die interessierenden Verkehrszeichen zu erkennen und zu klassifizieren. Mit der Klassifizierung wird die Verkehrszeicheninformation gewonnen, z.B. Geschwindigkeitsbegrenzung auf 70 km/h. Die klassifizierte Verkehrszeicheninformation wird dem Fahrer über ein entsprechendes Anzeigefeld mitgeteilt, indem z.B. die Ziffernkombination "70" angezeigt wird. Mit dem Verfahren, die Informationen des durch den Sensor gewonnenen Bildes auf Verkehrszeichen zu untersuchen und die Auswertung dem Fahrer anzuzeigen, ergibt sich das Problem, daß die Klassifikation sehr sicher erfolgen muß. Andernfalls ist nicht auszuschließen, daß der Fahrer falsch informiert wird. Es ist zu erwarten, daß Fehlklassifikationen einerseits die Akzeptanz eines solchen Systems herabsetzen, andererseits produkthaftungsrechtliche Fragen aufwerfen können. Wird einem Fahrer eine falsche Geschwindigkeitsbeschränkung eingespielt, so daß er die Höchstgeschwindigkeit überschreitet, so stellt sich die Frage, wer die Haftung aus daraus resultierenden Schäden übernimmt. Nach dem Stand der Technik sind Fehlklassifikationen bei der Erkennung von Verkehrszeichen nicht auszuschließen.

### Vorteile der Erfindung

Das erfindungsgemäße Verfahren zur Informationsanzeige mit den kennzeichnenden Merkmalen des Hauptanspruchs hat demgegenüber den Vorteil, daß direkt ein Ausschnitt des vom Sensor ermittelten Bildes angezeigt wird, ohne daß eine Auswertung nach dem Inhalt des Verkehrszeichens und eine Klassifikation erfolgt. Die Auswertung des Bildes der Kamera sucht nach den Umrissen der Verkehrszeichen und stellt diesen Bildausschnitt direkt dem Fahrer dar. Eine Klassifikation nimmt der Fahrer selbst vor, er wird lediglich auf das Verkehrszeichen hingewiesen und bekommt es auf unterstützende Art präsentiert. Sollte bei der Auswertung ein Fehler unterlaufen, wird dem Fahrer lediglich ein Bildausschnitt ohne Verkehrszeichen dargestellt, das er einfach ignorieren kann.

Durch die in den Unteransprüchen aufgeführten Maßnahmen ist eine vorteilhafte Weiterbildung und Verbesserung des im Hauptanspruch angegebenen Verfahrens möglich. Besonders vorteilhaft ist es, daß zusätzlich zu dem Verkehrszeichen noch weitere Informationen dargestellt werden können, wenn die Auswerteeinheit zusätzlich Informationen von anderen Fahrzeugsensoren außer der Kamera erhält. Vorteilhafterweise kann so sowohl die Zeit als auch die Entfernung seit der letzten Erkennung eines Verkehrszeichens angezeigt werden.

Vorteilhafterweise kann das Verfahren auch Verkehrszeichen mit Zusatzinformationen z.B. "nur bei Nässe" bei Geschwindigkeitsbeschränkungen erfassen. Die Darstellung des Verkehrszeichens erfolgt mit dem Zusatzschild, wobei die Darstellung im Anzeigefeld des Fahrzeugs zwar die Schrift nicht mehr auflösen kann aber auf das Vorhandensein des Zusatzzeichens hinweist.

Vorteilhaft ist auch, daß bei zusätzlicher Warnung des Fahrers basierend auf einer Verkehrszeichenklassifikation die Transparenz des Verfahrens erhalten bleibt. Die akustische, haptische oder optische Warnung des Fahrers basierend auf der Informationsverarbeitung kann durch den Fahrer leicht durch Vergleich mit dem Bild des Anzeigefelds verglichen werden.

### Zeichnung

Ausführungsbeispiele der Erfindung sind in den Zeichnungen dargestellt und in der nachfolgenden Beschreibung näher erläutert. Figur 1 zeigt ein Fahrzeug mit einem Bildsensor, Figur 2 eine beispielhafte Straßenszene, Figur 3 eine beispielhafte Straßenszene mit einer zweiten Darstellungsmöglichkeit, Figur 4 eine Straßenszene mit beispielhafter Darstellungsmöglichkeit, Figur 5 eine beispielhafte Straßenszene mit Darstellungsmöglichkeit und Figur 6 schematische Darstellung der Sensorik im Kraftfahrzeug.

### Beschreibung des Ausführungsbeispiels

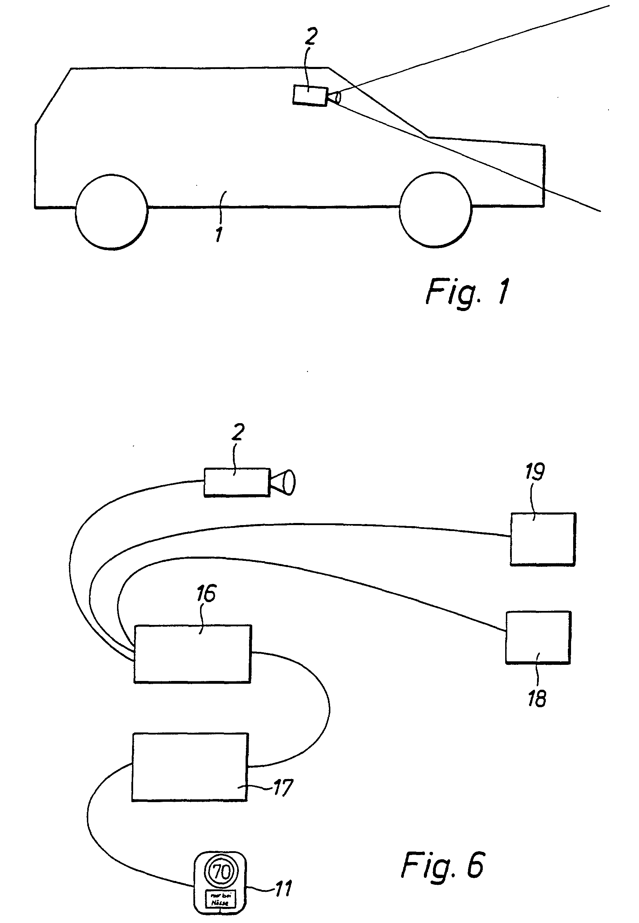

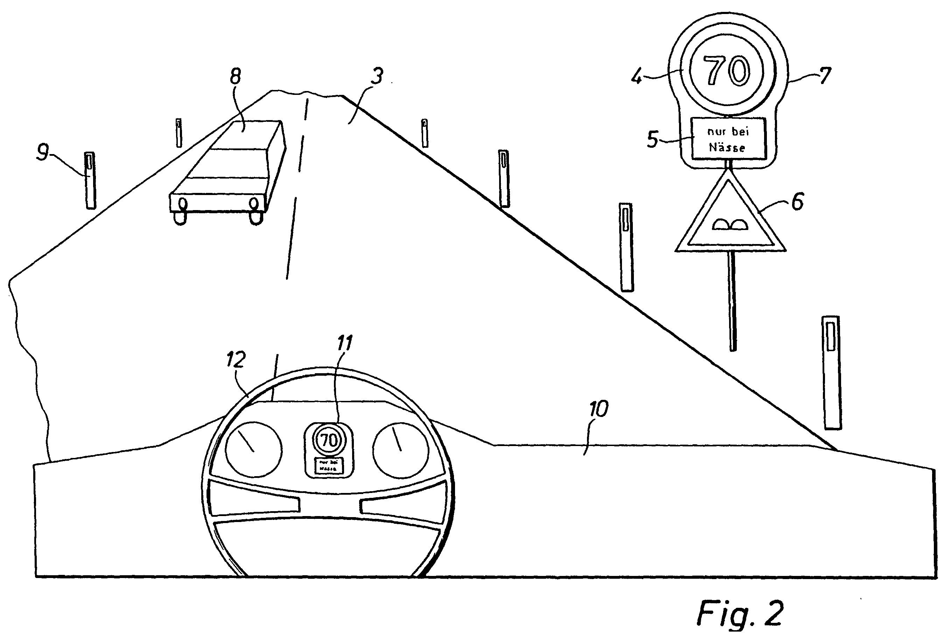

Figur 1 zeigt die Positionierung des Bildsensors 2 innerhalb des Fahrzeugs 1. Der Bildsensor 2 wird möglichst hoch an zentraler Position hinter der Windschutzscheibe angebracht, wobei die Blickrichtung in Fahrtrichtung ausgerichtet ist. Der Sensor sollte sich noch im Bereich der Scheibenwischer befinden. Figur 2 zeigt beispielhaft eine Fahrbahn 3, die von Fahrbahnbegrenzungen 9 eingefaßt ist. Auf der entgegenkommenden Fahrbahn ist schematisch ein entgegenkommendes Fahrzeug 8 dargestellt. Am rechten Fahrbahnrand ist eine Verkehrsschildkombination installiert. Das Verkehrszeichen 4 besitzt ein einschränkendes Zusatzzeichen 5. Zudem ist das Verkehrszeichen 6 "Achtung Fahrbahnunebenheiten" installiert. Aus dem Blick des Fahrers ist das Armaturenbrett 10 des eigenen Fahrzeugs mit dem Lenkrad 12 zu sehen. Im Armaturenbrett 10 ist ein Bildschirm 11 im Blickfeld des Fahrers eingelassen, auf dem der vom Bildsensor erfaßte und von der Bildverarbeitung herausgelöste Bildausschnitt 7 mit den interessierenden Verkehrszeichen dargestellt wird.

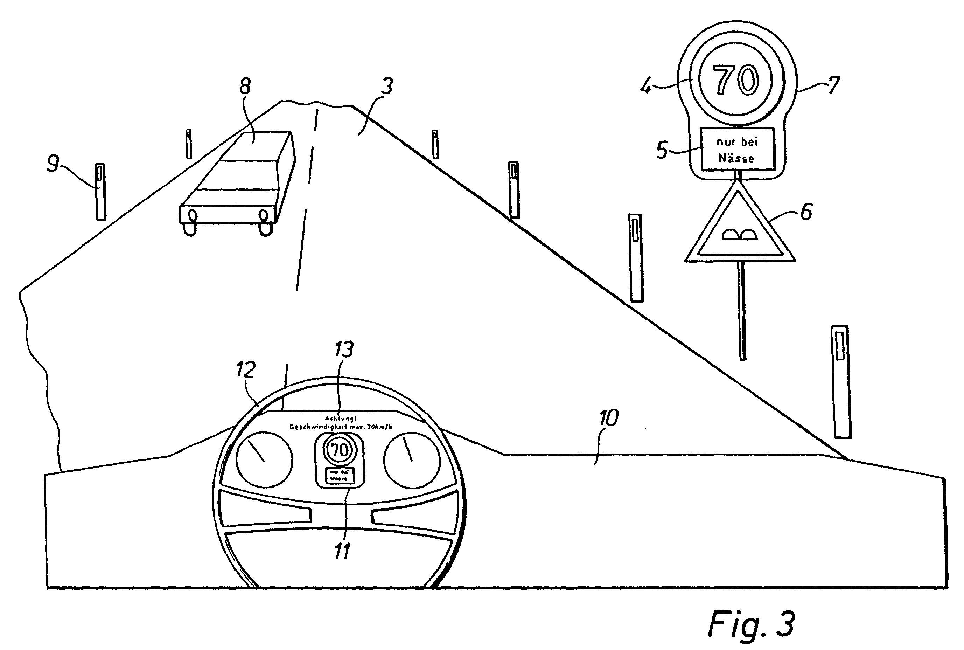

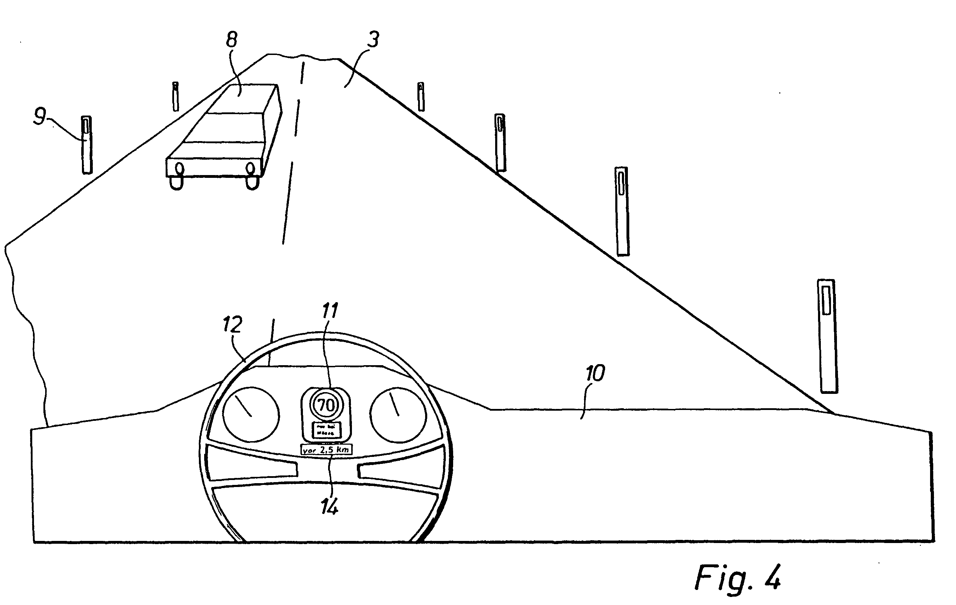

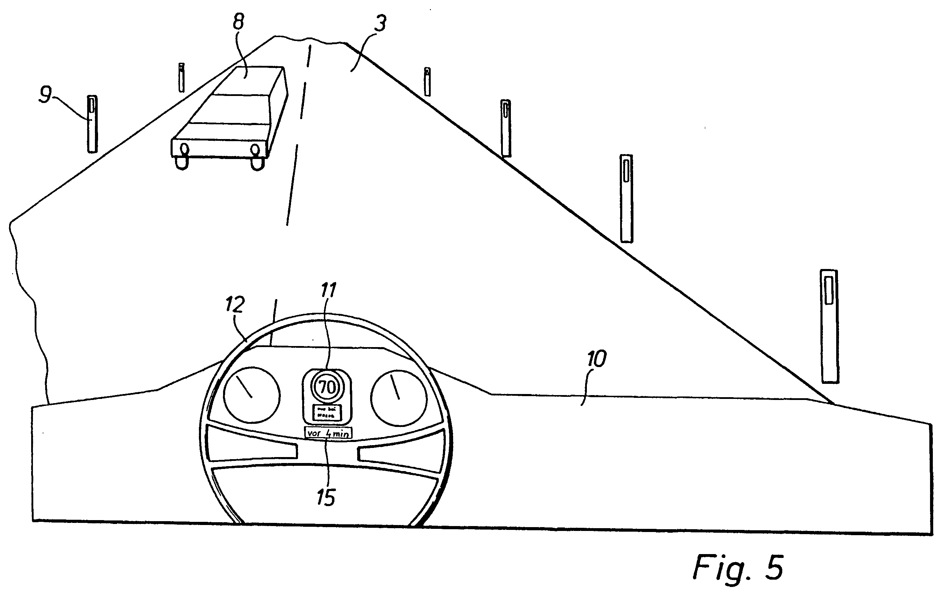

Figur 3 zeigt eine Szene wie in Figur 2 beschrieben, wobei zusätzlich eine Information 13 in einem Feld des Armaturenbretts dargestellt ist. Figur 4 zeigt eine weitere Darstellungsform, wobei eine Entfernungsangabe 14 zusätzlich dargestellt ist. Figur 5 zeigt die Darstellungsform mit einer zeitlichen Angabe 15. Figur 6 zeigt schematisch eine mögliche Realisierung des Sensoraufbaus zur Fahrerunterstützung. Der Bildsensor 2 ist über eine Leitung mit einer Auswerteelektronik 16 verbunden. Die Auswerteelektronik 16 weist weitere Verbindungen zu weiteren Sensoren 19 z.B. einen Tippschalter, über den Fahrerwünsche an die Auswerteelektronik vermittelt werden können, und Fahrzeugsensoren 18, die z.B. Fahrzeuggeschwindigkeit, Entfernung oder Zeitmessungen vornehmen. Die Auswerteelektronik 16 ist mit dem Steuergerät 17 verbunden, daß wiederum mit einem Anzeigefeld 11 in Verbindung steht. Der Bildsensor 2 wird in Fahrtrichtung des Fahrzeugs positioniert und nimmt Videobilder der Fahrzeugumgebung auf. Diese Bilder werden über die Leitung an die Auswerteelektronik vermittelt. In der Auswerteelektronik ist eine Software einzusetzen, die die für die Fahrerunterstützung benötigten Verkehrszeichen von sonstigen Bildteilen trennen kann. Im allgemeinen werden nicht sämtliche Verkehrszeichen herausgetrennt. Dies hängt aber von der gewählten Art der Fahrerunterstützung ab. Möchte man dem Fahrer beispielsweise nur bezüglich der besonders wichtigen Klasse von fahrgeschwindigkeitsbegrenzenden Verkehrszeichen unterstützen, so wird man die Software derart gestalten, daß nur Verkehrszeichen erkannt werden, die eine Begrenzung der Höchstgeschwindigkeit vorgeben. Die Software erkennt Verkehrszeichen anhand ihrer Umrißstruktur 7 anhand der Farben oder anhand der auf dem Zeichen befindlichen optischen Strukturen. Zur Verkehrszeichensegmentierung sind geeignete Algorithmen bekannt, z.B. aus "Detektion von Verkehrszeichen aus monochronen Bildfolgen" Diplomarbeit Holger Janßen, Institut für theoretische Nachrichtentechnik, Universität Hannover 1997. Ist ein zur Fahrerunterstützung notwendiges Verkehrszeichen in einem Sensorbild segmentiert worden, so kann dieses in darauffolgenden Bildern jeweils wieder segmentiert und zeitlich verfolgt werden bis es das Blickfeld des Sensors verläßt. Durch wiederholtes Segmentieren und zeitliche Verfolgung läßt sich eine Stabilisierung der Erkennung relevanter Verkehrszeichen erreichen. Nach der Segmentierung ist in geeigneter Art eine Klassifizierung vorzunehmen, da zu entscheiden ist, ob ein für die Fahrerunterstützung relevantes Verkehrszeichen vorliegt. Dabei wird ein für die Fahrerunterstützung relevantes Verkehrszeichen nicht lediglich mit seinem Informationsinhalt dargestellt, sondern der Bildausschnitt, der das Verkehrszeichen enthält, wird dem Fahrer direkt über ein Anzeigefeld 11 angezeigt. Erfolgt die Verkehrszeichenerkennung und Segmentierung fehlerhaft, was bei der Komplexität der Verkehrszeichenerkennung nicht vollkommen auszuschließen ist, so sieht der Fahrer in seinem Anzeigefeld einen beliebigen fehlsegmentierten Szenenausschnitt ohne Verkehrszeichen. Er kann das Fehlverhalten des Systems sofort erfassen und danach handeln. Es wird keine falsche Sicherheit vom System vorgegaukelt.

Das System zur Unterstützung des Fahrers kann noch in verschiedenen Verbesserungen vorkommen. Mit Hilfe algorithmischer Verfahren läßt sich unter Umständen die Bildqualität des vom Bildsensor aufgenommenen Bildes verbessern. Hierzu zählen vor allem Methoden der Bildaufhellung bzw. Bildverdunklung, Kontrastverstärkung und Kantenanhebung. Durch diese Verfahren wird das Bild lediglich für die Betrachtung durch den Fahrer verbessert, aber nicht sein Informationsgehalt verfälscht oder interpretiert.

Eine vorteilhafte Ausgestaltung des Systems erlaubt, daß das letzte segmentierte Verkehrszeichen aus der Menge der für die jeweilige, gewünschte Fahrerunterstützung relevanten Verkehrszeichen dem Fahrer auf dem Anzeigefeld 11 ständig präsentiert wird. Auf Autobahnen, auf denen im wesentlichen Geschwindigkeitsbegrenzungen, Überholverbote und deren Aufhebungen vorkommen, könnte der Fahrer durch Präsentation des letzten segmentierten Verkehrszeichens über die jeweils geltende letzte Fahrbeschränkung informiert werden.

Eine weitere vorteilhafte Ausgestaltung des Systems erlaubt es, eine bestimmte Anzahl der zeitlich zuletzt segmentierten Verkehrszeichenbilder in einem elektronischen Speicher zu halten. In diesem Fall ist eine Eingabemöglichkeit über eine Tastatur 19 für den Fahrer vorzusehen, die es ihm ermöglicht anzugeben, welches Zeichen er präsentiert bekommen möchte. Besonders sinnvoll ist eine sequentielle Präsentation der gespeicherten Verkehrszeichenbilder beginnend mit dem zeitlich zuletzt segmentierten Zeichen. Dabei kann der Fahrer durch Geben eines Signals, z.B. durch geeignete Tippschalter oder eine akustische Eingabe über einen geeigneten Eingabesensor 19 zum nächsten älteren segmentierten Verkehrszeichen schalten. Somit ist eine Erinnerung des Fahrers auf dessen Wunsch hin an die zeitlich zuletzt erkannten und segmentierten Verkehrszeichen möglich. Neben der ausschließlichen Präsentation der segmentierten Verkehrszeichen ist eventuell eine zusätzliche Zeicheninterpretation sinnvoll. Dabei kann eine symbolhafte Information des Fahrers durch definierte Zeichen 13, siehe Figur 3, erfolgen. In diesem Fall kann der Fahrer durch Vergleich der angezeigten Zeichen mit dem gleichzeitig präsentierten Bildausschnitt sofort feststellen, ob die automatische Verkehrszeicheninterpretation fehlerhaft erfolgt. Auch hier ist die Funktion des Systems transparent, so daß die Verantwortung ausschließlich beim Fahrer verbleibt.

In einer weiteren Ausführungsform werden Warnungen an den Fahrer ausgegeben, die aufgrund von Informationen weiterer Fahrzeugsensoren gewonnen werden. So kann z.B. ein Geschwindigkeitssignal mit der Ausgabe einer Warnung kombiniert werden. Wenn der Fahrer schneller fährt, als die nach dem Verkehrszeichen zulässige Höchtgeschwindigkeit erlaubt, wird diese Diskrepanz von der Auswerteinheit erkannt und ein akustisches Warnsignal generiert. Dabei ist es möglich, einen Warnton, eine akustische Sprachausgabe, oder auch eine optische Warnanzeige zu aktivieren.

In einer weiteren Ausführungsform wird über den Bildsensor und die Auswerteeinheit eine Fahrspurerkennung durchgeführt. Mit Hilfe dieser bildbasierten Fahrspurverfolgung kann ein Ausscheren des Fahrzeugs auf die Gegenfahrbahn, z.B. zu Überholzwecken von der Auswerteeinheit erkannt werden. Im Zusammenhang mit einem vorab erkannten Überholverbot ist es dann möglich, wiederum ein Warnsignal auszugeben.

Neben der Präsentation des Verkehrszeichens auf dem Anzeigefeld 11 ist es auch möglich, dem Fahrer eine Entfernungsangabe zur Verfügung zu stellen, die den Abstand zwischen aktueller Fahrzeugposition und der Position, an der das Verkehrszeichen detektiert wurde, angibt. Die Zusatzinformation 14, siehe Figur 4, wird im Anzeigefeld dargestellt. Somit hat der Fahrer zumindest eine eingeschränkte Möglichkeit zu überprüfen, ob das angezeigte Verkehrszeichen überhaupt noch für ihn relevant ist. Die Entfernungsinformation kann dabei direkt aus dem in jedem Fahrzeug vorhandenen Entfernungsmesser entnommen werden oder aber durch Verknüpfung von Fahrzeuggeschwindigkeitsinformation mit der Zeit, die seit der Detektion des Verkehrszeichens vergangen ist. Die Auswertung der Sensorsignale erfolgt in der Auswerteeinheit 16, die über die Steuereinheit 17 eine mögliche Ausgabe auf dem Anzeigefeld 11 bewirkt.

Alternativ zu einer Darstellung der Entfernungsinformation kann gleichzeitig mit der Verkehrszeichendarstellung eine Zeitinformation an den Fahrer gegeben werden. Dazu ist die Zeitdifferenz zwischen Verkehrszeichendetektion und der aktuellen Zeit an den Fahrer über die Steuereinheit 17 zu erfassen.

Für die Bilderfassung für die Verkehrszeichendetektion ist ein CMOS-Sensor mit nichtlinearer Wandkennlinie von Vorteil. Verkehrszeichen besitzen im allgemeinen lackierte, metallische Oberflächen oder Kunststoffoberflächen, die glatt sind und einfallendes Licht gut reflektieren. Bei ungünstigem Lichteinfall oder Nachtfahrten mit Scheinwerferbeleuchtung kann so eine durch Lichtreflektion oder sonstige Effekte verursachte extreme Bildhelligkeitsdynamik auftreten. Mit Hilfe eines nichtlinearen Bildsensors sind diese Helligkeitsunterschiede beherrschbar, so daß eine einfache Erstellung eines auswertbaren Videobildes der Auswerteelektronik zur Verfügung gestellt werden kann. Besonders vorteilhaft ist in diesem Zusammenhang ein Bildsensor mit logarithmischer Kennlinie, da so eine konstante Kontrastauflösung über den gesamten Helligkeitsbereich gewährleistet ist.

## Patentansprüche

1. Verfahren zur Informationsanzeige in einem Fahrzeug, das eine Kamera (2) und eine damit verbundene Steuer/Auswerteinheit (16, 17) zur Bilderkennung aufweist, **dadurch gekennzeichnet, daß** auf einer Anzeigeeinheit (11) direkt ein Ausschnitt des Bildes der Kamera (2) dem Fahrer des Fahrzeugs angezeigt wird, der nach Auswertung durch die Steuer/Auswerteeinheit (16, 17) ein Verkehrszeichen enthält.

2. Verfahren zur Informationsanzeige nach Anspruch 1, **dadurch gekennzeichnet, daß** die Steuer/Auswerteeinheit Informationen von mindestens einem weiteren Fahrzeugsensor (18, 19) auswertet und daß die Ergebnisse der Auswertung zusätzlich zum Ausschnitt des Bildes der Kamera dargestellt wird.

3. Verfahren zur Informationsanzeige nach Anspruch 2, **dadurch gekennzeichnet, daß** die Entfernung oder/oder die Zeit seit der letzten Erkennung eines Verkehrszeichens angezeigt wird.

4. Verfahren zur Informationsanzeige nach Anspruch 1 bis 3,
**dadurch gekennzeichnet, daß** die Klassifikation des letzten erkannten Verkehrszeichens angezeigt wird.

5. Verfahren zur Informationsanzeige nach Anspruch 1 bis 4, **dadurch gekennzeichnet, daß** der Ausschnitt des Bildes der Kamera den Umriß eines Verkehrszeichens und eines Zusatzzeichens umfaßt.

6. Verfahren zur Informationsanzeige nach Anspruch 1 bis 5, **dadurch gekennzeichnet, daß** die zuletzt erkannten Verkehrszeichen abrufbar in einer Datenbank abgelegt und/oder dem Fahrer dargestellt werden.

7. Verfahren zur Informationsanzeige nach Anspruch 1 bis 6, **dadurch gekennzeichnet, daß** bei einem Soll/Ist-Vergleich der Geschwindigkeiten des Fahrzeugs im Fall einer überhöhten Geschwindigkeit eine akustische und/oder optische Warnung erfolgt.

8. Verfahren zur Informationsanzeige nach Anspruch 1 bis 7, **dadurch gekennzeichnet, daß** eine Fahrspurerkennung durch die Steuer/Auswerteeinheit erfolgt und daß ein unerlaubtes Ausscheren des Fahrzeugs im Überholverbot eine akustische und/oder optische Warnung auslöst.

9. Verfahren zur Informationsanzeige nach Anspruch 1 bis 8, **dadurch gekennzeichnet, daß** die Kamera einen nichtlinearen bzw. logarithmierenden CMOS-Bildsensor enthält.

## Claims

1. Method for the display of information in a vehicle which has a camera (2) and a control/evaluation unit (16, 17) connected thereto for image recognition, **characterized in that** a display unit (11) displays a portion of the image from the camera (2) which, after evaluation by the control/evaluation unit (16, 17), contains a road sign.

2. Method for the display of information according to Claim 1, **characterized in that** the control/evaluation unit evaluates information from at least one further vehicle sensor (18, 19), and **in that** the results of the evaluation are shown in addition to the portion of the image from the camera.

3. Method for the display of information according to Claim 2, **characterized in that** the distance and/or the time since a road sign was last recognized is displayed.

4. Method for the display of information according to Claims 1 to 3, **characterized in that** the classification of the last road sign recognized is displayed.

5. Method for the display of information according to Claims 1 to 4, **characterized in that** the portion of the image from the camera comprises the outline of a road sign and of an additional sign.

6. Method for the display of information according to Claims 1 to 5, **characterized in that** the last road signs recognized are stored in a database such that they can be retrieved and/or are shown to the driver.

7. Method for the display of information according to Claims 1 to 6, **characterized in that**, during a nominal/actual comparison of the speeds of the vehicle, an audible and/or visual warning is given in the case of an excessive speed.

8. Method for the display of information according to Claims 1 to 7, **characterized in that** traffic lane detection is carried out by the control/evaluation unit, and **in that** an audible and/or visual warning is triggered by the vehicle's prohibited pulling-out when there is an overtaking restriction.

9. Method for the display of information according to Claims 1 to 8, **characterized in that** the camera contains a non-linear or logarithm-finding CMOS image sensor.

## Revendications

1. Procédé d'affichage d'informations dans un véhicule équipé d'une caméra (2) et d'une unité de commande/exploitation (16, 17) pour la reconnaissance d'images,
**caractérisé en ce que**
sur une unité d'affichage (11) on affiche directement un extrait de l'image de la caméra pour le conducteur du véhicule qui reçoit un signal de circulation après exploitation d'informations par l'unité de commande/traitement (16, 17).

2. Procédé d'affichage d'informations selon la revendication 1,
**caractérisé en ce que**
l'unité de commande/exploitation exploite des informations d'au moins un autre capteur du véhicule (18, 19), et le résultat de l'exploitation est représenté en plus de l'extrait de l'image de la caméra.

3. Procédé d'affichage d'informations selon la revendication 2,
**caractérisé en ce qu'**
on affiche l'éloignement et/ou le temps écoulé depuis la dernière détection d'un signal de circulation.

4. Procédé selon l'une quelconque des revendications 1 à 3,
**caractérisé en ce qu'**
on affiche le classement des derniers signaux de circulation reconnus.

5. Procédé selon l'une quelconque des revendications 1 à 4,
**caractérisé en ce que**
l'extrait de l'image de la caméra correspond au contour d'un signal de circulation et d'un signal supplémentaire.

6. Procédé selon l'une quelconque des revendications 1 à 5,
**caractérisé en ce que**
les signaux de circulation reconnus en dernier lieu sont enregistrés dans une bande de données de manière à pouvoir être appelés et/ou présentés au conducteur.

7. Procédé selon l'une quelconque des revendications 1 à 6,
**caractérisé en ce que**
par une comparaison de valeur de consigne/valeur réelle de la vitesse du véhicule en cas de dépassement d'une vitesse, il y a émission d'un avertissement acoustique et/ou optique.

8. Procédé selon l'une quelconque des revendications 1 à 7,
**caractérisé en ce qu'**
on fait une reconnaissance de voie de circulation par l'unité de commande/exploitation, et un changement de file non autorisé du véhicule en cas d'interdiction de dépalssement déclenche un avertissement optique et/ou acoustique.

9. Procédé selon l'une quelconque des revendications 1 à 8,
**caractérisé en ce que**
la caméra comporte un capteur d'image CMOS non linéaire ou logarithmique.
